# EUROPÄISCHE PATENTANMELDUNG

(11) **EP 3 290 246 A1**
(43) Veröffentlichungstag der Anmeldung: **07.03.2018**
(21) Anmeldenummer: 17188224.4
(22) Anmeldetag: 29.08.2017
(51) Int. Cl.: B60H 1/34

(54) **LUFTAUSSTRÖMER**

(30) Priorität: 01.09.2016 DE 102016116351
(71) Anmelder: Fischer Automotive Systems GmbH & Co. KG, 72160 Horb a.N. (DE)
(72) Erfinder: Schaal, Falk, 72250 Freudenstadt (DE)
(74) Vertreter: Suchy, Ulrich Johannes

(57) **Zusammenfassung**

Die Erfindung betrifft einen Luftausströmer (1) zu einer Belüftung eines Fahrgastraums eines Kraftwagens und schlägt ein Gehäuse (2) mit einer schlitzförmigen Luftaustrittsöffnung (4) und zwei Luftzuführkanälen (5) vor, die V-förmig zusammen führen. In einer Strömungsrichtung nach den Luftzuführkanälen (5) weitet sich das Gehäuse (2) bogenförmig auf und verengt sich anschließend wieder zu der schlitzförmigen Luftaustrittsöffnung (4). In einem aufgeweiteten Abschnitt weist das Gehäuse (2) einen Luftteiler (7) mit ellipsenförmigem Querschnitt auf, der das Gehäuse (2) in zwei Luftkanäle (8) teilt, die zur Luftaustrittsöffnung (4) schräg aufeinander zu verlaufen. Durch eine Steuerung von Luftmengen, die durch die beiden Luftzuführkanäle (5) und die beiden Luftkanäle (8) strömen, lässt sich eine Luftströmung aus der Luftaustrittsöffnung (4) des Luftausströmers (1) in alle Richtungen lenken.

## Beschreibung

Die Erfindung betrifft einen Luftausströmer mit den Merkmalen des Oberbegriffs des Anspruchs 1. Luftausströmer dienen einer Belüftung, Beheizung und ggf. Kühlung eines Fahrgastraums eines Kraftwagens und sind dort beispielsweise in einem Armaturenbrett angeordnet.

Das Patent DE 10 2013 210 055 B3 offenbart einen Luftausströmer mit einer Flachdüse mit einem rechteckigen Querschnitt, der breiter als hoch ist. Eine Luftaustrittsöffnung des bekannten Luftausströmers ist ebenfalls rechteckig und ein Mehrfaches breiter als hoch, weswegen der Luftausströmer bzw. die Luftaustrittsöffnung auch als Schlitzdüse bezeichnet werden kann.

Der bekannte Luftausströmer weist ein im Querschnitt rechteckiges Gehäuse mit einer rechteckigen Lufteintrittsöffnung und der ebenfalls rechteckigen Luftaustrittsöffnung auf, der sich hinter der Lufteintrittsöffnung zunächst erweitert und anschließend in Richtung zur Luftaustrittsöffnung wieder verjüngt. In einem erweiterten Bereich weist der Luftausströmer einen Luftteiler auf, der sich mit einem Stromlinienprofil in einem sich erweiternden Bereich des Gehäuses erweitert und einem sich verjüngenden Bereich des Gehäuses wieder verjüngt. Der Luftteiler teilt das Gehäuse des Luftausströmers in zwei Luftkanäle mit jeweils gleichen, flachen und in einer Strömungsrichtung gleich bleibenden Querschnitten, die hinter der Lufteintrittsöffnung zunächst auseinander und anschließend zur Luftaustrittsöffnung schräg aufeinander zu laufen. Ein durch die Lufteintrittsöffnung in das Gehäuse des Luftausströmers strömender Luftstrom wird vom Luftteiler in zwei Luftströme durch die beiden Luftkanäle geteilt, die zunächst auseinander und anschließend wieder schräg aufeinander zu strömen, so dass sie an oder nach der Luftaustrittsöffnung schräg zusammenströmen und sich zu einem gemeinsamen Luftstrom vereinigen.

An einem der Lufteintrittsöffnung zugewandten Ende des Luftteilers weist der bekannte Luftausströmer einen Leitflügel auf, der sich über eine Breite des Gehäuses und des Luftteilers erstreckt und der nach oben und unten schwenkbar ist, so dass er wahlweise einen der beiden Luftkanäle mehr oder weniger stark versperrt. In seinen Endstellungen sperrt der Leitflügel jeweils einen der beiden Luftkanäle ganz. Durch Schwenken des Leitflügels lässt sich ein durch die Lufteintrittsöffnung in das Gehäuse des Luftausströmers strömender Luftstrom in die beiden Luftkanäle aufteilen, das heißt ein Verhältnis der durch die beiden Luftkanäle strömenden Luftmengen einstellen. Das Verhältnis der Luftströme durch die beiden Luftkanäle bestimmt wegen der zur Luftaustrittsöffnung schräg aufeinander zu laufenden Luftkanäle eine Richtung des vereinigten Luftstroms nach Austritt aus der Luftaustrittsöffnung des Luftausströmers: Eine größere Luftmenge aus einem der beiden Luftkanäle lenkt den gemeinsamen Luftstrom nach der Luftaustrittsöffnung schräg in die entsprechende Richtung ab.

Aufgabe der Erfindung ist einen Luftausströmer der vorstehend erläuterten Art zu schaffen, der eine Luftlenkung nicht nur nach oben oder unten, das heißt nicht nur in einer Dimension, sondern auch seitlich, das heißt nach links oder rechts und damit in zwei Dimensionen ermöglicht und zwar derart, dass nur wenige bewegte Teile im Bereich des Luftausströmers notwendig sind. Maßgeblich ist die Luftlenkung in zwei Dimensionen, also nicht nur in einer und einer entgegengesetzten Richtung. Bei dem genannten Luftausströmer erfolgt dies durch weitere Leitflügel, die im Bereich der Lufteintrittsöffnung angeordnet sind.

Diese Aufgabe wird erfindungsgemäß durch die Merkmale des Anspruchs 1 gelöst. Der erfindungsgemäße Luftausströmer mit den Merkmalen des Anspruchs 1 weist mindestens eine Luftaustrittsöffnung und mindestens drei Luftkanäle auf, die mindestens drei Luftströme zumindest abschnittsweise getrennt voneinander in Richtung der mindestens einen Luftaustrittsöffnung führen. Die Luftkanäle können bis zur Luftaustrittsöffnung reichen oder vorher enden, sie trennen die Luftströme physisch voneinander. Die Luftkanäle sind innerhalb des Luftausströmers feststehend bzw. unbeweglich, eine Luftlenkung erfolgt nicht durch eine Bewegung der Luftkanäle. Es sind auch grundsätzlich keine beweglichen Elemente wie Leitflügel oder schwenkbare Lamellen zur Luftlenkung vorgesehen. Solche beweglichen Elemente können allerdings zu einer Steuerung die Luftkanäle durchströmender Luftmengen und dadurch mittelbar zu einer Beeinflussung einer Luftströmungsrichtung aus der Luftaustrittsöffnung des Luftausströmers vorhanden sein.

Erfindungsgemäß verlaufen die mindestens drei Luftkanäle zur Luftaustrittsöffnung des Luftausströmers hin schräg aufeinander zu, das heißt in Richtung der Luftaustrittsöffnung nähern sich die mindestens drei Luftkanäle einander; sie können auch ganz zusammen führen. Erfindungsgemäß nähern sich die mindestens drei Luftkanäle aus mindestens drei Richtungen einander, also nicht nur aus zwei gegenüberliegenden Richtungen. Mit anderen Worten: Die mindestens drei Luftkanäle nähern sich in Richtung der Luftaustrittsöffnung des Luftausströmers in zwei Dimensionen quer zu einer Strömungsrichtung durch den Luftausströmer bzw. durch die Luftkanäle, wobei die Strömungsrichtung eine Dimension ist, zu der die Luftkanäle in Richtung der Luftaustrittsöffnung in zwei anderen Dimensionen schräg verlaufen. In oder nach der Luftaustrittsöffnung vereinigen sich die Luftströme aus den mindestens drei Luftkanälen zu einem gemeinsamen Luftstrom, dessen Richtung sich aus den Richtungen, in denen sich die mindestens drei Luftkanäle schräg einander nähern und aus den Luftmengen, die die mindestens drei Luftkanäle durchströmen, bestimmt. Wird die Luftmenge durch einen Luftkanal erhöht, lenkt ein aus diesem Luftkanal ausströmender Luftstrom den vereinigten, gemeinsamen Luftstrom aus der Luftaustrittsöffnung des Luftausströmers in die entsprechende Richtung. Weil die mindestens drei Luftkanäle des erfindungsgemäßen Luftausströmers in zwei Dimensionen quer zur Strömungsrichtung schräg aufeinander zu führen, lässt sich durch Steuerung von Luftmengenverhältnissen in den mindestens drei Luftkanälen die Richtung des vereinigten, gemeinsamen Luftstroms aus der Luftaustrittsöffnung des Luftausströmers in zwei Dimensionen quer zur Strömungsrichtung ablenken, das heißt z. B. bei einem im Armaturenbrett angeordneten Luftausströmer nach oben, unten, links und rechts.

Eine Ausgestaltung der Erfindung sieht vier Luftkanäle vor, die beispielsweise paarweise aus entgegengesetzten Richtungen in der Strömungsrichtung durch den Luftausströmer schräg aufeinander zu in Richtung der Luftaustrittsöffnung verlaufen.

Luftmengen der Luftströme durch die Luftkanäle sind vorzugsweise steuerbar, wobei eine Gesamtmenge der durch alle Luftkanäle des Luftausströmers strömenden Luft und/oder ein Verhältnis der durch die einzelnen Luftkanäle strömenden Luftmengen steuerbar ist. Letzteres beeinflusst die Richtung der Luftausströmung aus der Luftaustrittsöffnung und ermöglicht die gewünschte Lenkung eines Luftstroms aus dem Luftausströmer.

Eine Ausgestaltung der Erfindung sieht ein Gehäuse mit mindestens einer Lufteintrittsöffnung und mindestens einer Luftaustrittsöffnung vor, in dem ein Luftteiler angeordnet ist, der das Gehäuse in zwei der mindestens drei Luftkanäle teilt. Es können zwei oder mehr Luftteiler vorhanden sein, die das Gehäuse in die mindestens zwei Luftkanäle teilen. Der oder die Luftteiler und das Gehäuse bzw. Teile des Gehäuses können Wandungen der Luftkanäle bilden. Der oder die Luftteiler können beispielsweise plattenförmig oder voluminös sein.

Eine Weiterbildung der Erfindung sieht vor, dass sich ein Innenquerschnitt des Gehäuses und/oder ein voluminöser Luftteiler in Richtung der mindestens einen Luftaustrittsöffnung verjüngen, so dass die beiden vom Luftteiler im Gehäuse gebildeten Luftkanäle in Richtung der mindestens einen Luftaustrittsöffnung schräg in zwei Dimensionen quer zur Strömungsrichtung aufeinander zu verlaufen.

Eine Ausgestaltung der Erfindung sieht vor, dass der Luftausströmer ein rohrförmiges Gehäuse mit Trennwänden aufweist, die das Gehäuse in Luftkanäle teilen. Das Gehäuse kann einander rechtwinklig oder in anderen Winkeln schneidende Trennwände aufweisen. Die Trennwände können auch als Luftteiler aufgefasst werden, sie sind fest und unbeweglich im Gehäuse angeordnet. In Richtung bzw. nahe der Luftaustrittsöffnung verjüngt sich ein Innenquerschnitt des Gehäuses und die Trennwände verlaufen gegebenenfalls schräg aufeinander zu, so dass wie vorgesehen die Luftkanäle zur Luftaustrittsöffnung hin quer zur Strömungsrichtung schräg aufeinander zu führen.

Eine Ausgestaltung der Erfindung sieht mindestens eine schlitzförmige Luftaustrittsöffnung vor, womit eine Luftaustrittsöffnung gemeint ist, die ein Mehrfaches breiter als hoch ist oder allgemein ausgedrückt deren lichte Weite in einer Richtung ein Mehrfaches größer als in einer anderen Richtung ist. "Mehrfaches" meint insbesondere mindestens dreifach, vorzugsweise mindestens vierfach.

Die Erfindung wird nachfolgend anhand zweier in der Zeichnung dargestellter Ausführungsbeispiele näher erläutert. Es zeigen:
- Figur 1: einen erfindungsgemäßen Luftausströmer in perspektivischer Darstellung teilweise aufgeschnitten;
- Figur 2: ein zweites Ausführungsbeispiel eines erfindungsgemäßen Luftausströmers in Ansicht auf eine Luftaustrittsöffnung entgegen einer Strömungsrichtung;
- Figur 3: einen Längsschnitt des Luftausströmers aus Figur 2 in einer horizontalen Ebene; und
- Figur 4: einen Längsschnitt des Luftausströmers aus Figur 2 in einer vertikalen Ebene.

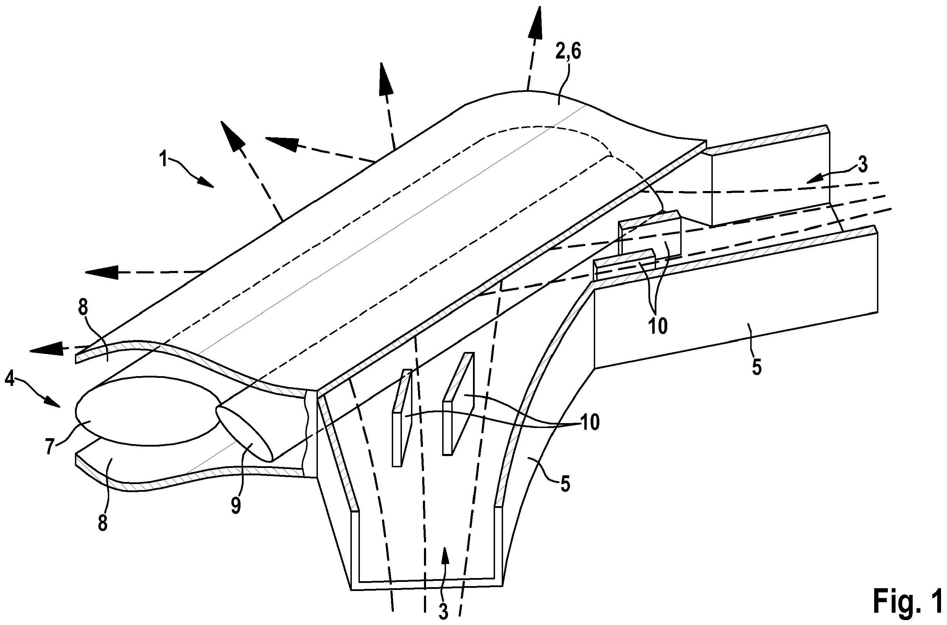

Der in Figur 1 dargestellte, erfindungsgemäße Luftausströmer 1 ist zur Belüftung, Heizung und gegebenenfalls Kühlung eines Fahrgastraums eines nicht dargestellten Kraftwagens und dort zum Einbau in ein Armaturenbrett vorgesehen. Der Luftausströmer 1 weist ein flaches Gehäuse 2 mit zwei Lufteintrittsöffnungen 3 und einer Luftaustrittsöffnung 4 auf. Von den beiden Lufteintrittsöffnungen 3 verlaufen zwei Luftzuführkanäle 5 V-förmig zusammen und gehen dort, wo sie zusammen kommen, in einen gemeinsamen Gehäuseteil 6 über. Im Ausführungsbeispiel weisen die beiden Luftzuführkanäle 5 sich in einer Strömungsrichtung aufweitende Rechteckquerschnitte auf und verlaufen in einem stumpfen Winkel zusammen, was allerdings nicht zwingend für die Erfindung ist. Die Luftzuführkanäle 5 sind an ihren Oberseiten geschlossen, wobei in der Zeichnung eine Oberseite der Luftzuführkanäle 5 weggeschnitten ist, um eine Innenseite sichtbar zu machen. "In Strömungsrichtung" bedeutet von den Lufteintrittsöffnungen 3 zur Luftaustrittsöffnung 4. Die Luftzuführkanäle 5 können als Bestandteile des Gehäuses 2 des Luftausströmers 1 aufgefasst werden.

Der gemeinsame Gehäuseteil 6 weist einen flachen Rechteckrohrquerschnitt auf, der ausgehend von den Luftzuführkanälen 5 zunächst konstant ist und sich anschließend senkrecht zu einer von den V-förmig angeordneten Luftzuführkanälen 5 gebildeten Ebene bogenförmig zunächst erweitert und anschließend zu der Luftaustrittsöffnung 4 hin wieder verjüngt. Die Luftaustrittsöffnung 4 ist ebenfalls rechteckförmig, wobei sie ein Mehrfaches breiter als hoch ist und deswegen auch als schlitzförmig aufgefasst werden kann. In einem aufgeweiteten Abschnitt des gemeinsamen Gehäuseteils 6 weist der Luftausströmer 1 einen Luftteiler 7 auf, der über eine gesamte Breite des Gehäuseteils 6 einen konstanten, ellipsenförmigen Querschnitt aufweist. Der Luftteiler 7 teilt den Gehäuseteil 6 in zwei Luftkanäle 8 mit im Ausführungsbeispiel konstanten, flachen Rechteckquerschnitten quer zur Strömungsrichtung. Von den Luftzuführkanälen 3 aus verlaufen die beiden Luftkanäle 8 zunächst auseinander und anschließend in Richtung der Luftaustrittsöffnung 4 wieder schräg aufeinander zu. In der Zeichnung ist eine Seitenwand des Gehäuseteils 6 weggeschnitten, damit der Luftteiler 7 sichtbar ist.

An einem den Luftzuführkanäle 5 zugewandten Ende weist der Luftteiler 7 ein streifenförmiges, nach oben und unten, das heißt senkrecht zu der von den V-förmig angeordneten Luftzuführkanälen 5 gebildeten Ebene schwenkbares Luftleitelement 9 auf. Mit dem Luftleitelement 9 ist ein Verhältnis von Luftströmen durch die beiden Luftkanäle 8 einstellbar. In Endstellungen sperrt das Luftleitelement 9 jeweils einen der beiden Luftkanäle 8.

In einem Übergangsbereich zum Gehäuseteil 6 sind in den Luftzuführkanälen 5 feststehende, plattenförmige Luftleitelemente 10 angeordnet.

Als einziges bewegliches Teil weist der Luftausströmer 1 das schwenkbare Luftleitelement 9 auf, alle anderen Teile bzw. Elemente des Luftausströmers 1 sind feststehend, das heißt unbeweglich.

Mit den beiden Luftzuführkanälen 5 und den beiden Luftkanälen 8 weist der Luftausströmer 1 vier Luftkanäle 5, 8 auf, die jeweils einen Luftstrom, insgesamt also vier Luftströme abschnittsweise getrennt voneinander führen. Dabei führen die Luftzuführkanäle 5 zwei Luftströme in der Strömungsrichtung durch den Luftausströmer 1 schräg aufeinander zu, die sich in dem Übergangsbereich von den beiden Luftzuführkanälen 5 in den gemeinsamen Gehäuseteil 6 zu einem gemeinsamen Luftstrom vereinigen, den in der Strömungsrichtung anschließend der Luftteiler 7 wieder in zwei Luftströme durch die beiden Luftkanäle 8 im Gehäuseteil 6 teilen. In den beiden Luftkanälen 8 strömen die beiden Luftströme zunächst schräg bzw. bogenförmig auseinander und anschließend wieder schräg bzw. bogenförmig aufeinander zu und vereinigen sich in oder nach der Luftaustrittsöffnung 4 des Luftausströmers 1 wieder zu einem gemeinsamen Luftstrom aus der Luftaustrittsöffnung 4 des Luftausströmers 1 heraus. Eine Auslenkung der Luftströme in den beiden Luftzuführkanälen 5 ist senkrecht zu einer Auslenkung der Luftströme in den beiden Luftkanälen 8. Durch eine Steuerung eines Verhältnisses der beiden durch die Luftzuführkanäle 5 strömenden Luftmengen lässt sich eine Richtung, in der Luft in den Gehäuseteil 6 strömt, in der einen Dimension, in der die Luftzuführkanäle 5 schräg zum Gehäuseteil 6 verlaufen, einstellen. Luft wird den beiden Luftzuführkanälen 5 beispielsweise getrennt mit zwei nicht dargestellten Gebläsen oder mit einem gemeinsamen Gebläse durch zwei Kanäle oder Schläuche (ebenfalls nicht dargestellt), wobei ein Luftmengenverhältnis beispielsweise mit einem schwenkbaren Luftleitelement einstellbar ist, zugeführt.

Ein Verhältnis von Luftmengen der Luftströme durch die beiden Luftkanäle 8 im Gehäuseteil 6 ist mit dem schwenkbaren Luftleitelement 9 einstellbar. Eine schräge Zuströmung von Luft aus den Luftzuführkanälen 5 in das Gehäuseteil 6 führt zu einer schrägen Luftausströmung aus der Luftaustrittsöffnung 4, die durch die Einstellung des Verhältnisses der Luftmengen durch die Luftkanäle 8 im Gehäuseteil 6 zusätzlich in der anderen Dimension quer zur Strömungsrichtung, im Ausführungsbeispiel also nach oben und unten lenkbar ist. Auf diese Weise lässt sich eine Richtung der aus der Luftaustrittsöffnung 4 des Luftausströmers 1 ausströmenden Luft in allen Richtungen lenken.

Alternativ zum Luftleitelement 9 könnten die beiden Luftzuführkanäle 5 auch jeweils eine horizontale Trennwand aufweisen, so dass tatsächlich vier Luftzuführkanäle bestehen (nicht dargestellt). Die oberen beiden würden in diesem Fall direkt in den oberen Luftkanal 8 und die unteren in den unteren Luftkanal 8 münden. Die Lenkung der Richtung erfolgt durch eine Steuerung der Luftmenge in die vier Luftzuführkanäle.

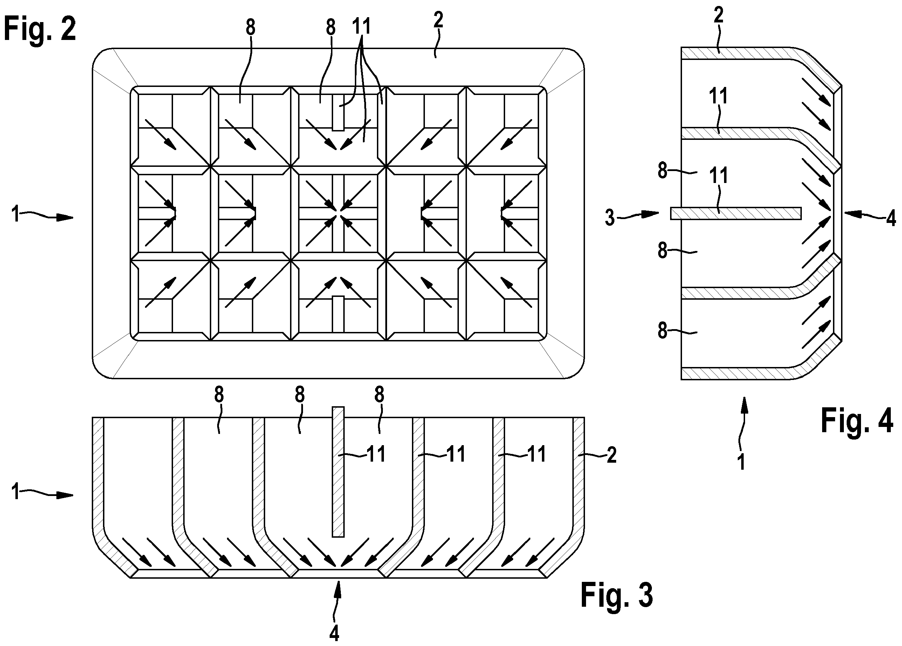

Der Luftausströmer aus Figuren 2 bis 4 weist ein Gehäuse 2 mit einer Lufteintrittsöffnung 3 und einer Luftaustrittsöffnung 4 auf. Das Gehäuse 2 weist einen Rechteckrohrquerschnitt auf. Unbeweglich feststehende Trennwände 11 unterteilen das Gehäuse 2 in Luftkanäle 8. Die Trennwände 11 sind parallel und senkrecht zueinander und zu Wänden des Gehäuses 2 angeordnet und kreuzen einander senkrecht. Im Ausführungsbeispiel teilen drei horizontale Trennwände 11 und fünf vertikale Trennwände 11 das Gehäuse 2 in 24 Luftkanäle 8, die auf die Luftaustrittsöffnung 4 (oder wahlweise auf die Lufteintrittsöffnung 4) gesehen in einem Raster mit vier Zeilen und sechs Spalten angeordnet sind. Die Anzahl der Trennwände 11 und Luftkanäle 8 ist nicht zwingend für die Erfindung. Notwendig sind mindestens zwei einander kreuzende Trennwände 11, die das Gehäuse 2 in mindestens vier Luftkanäle 8 teilen.

In einer Strömungsrichtung von der Lufteintrittsöffnung 3 zur Luftaustrittsöffnung 4 weist das Gehäuse 2 zunächst einen konstanten Rechteckquerschnitt auf und verjüngt sich dann zur Luftaustrittsöffnung 4 hin. Wie das Gehäuse 2 verlaufen die Trennwände 11 ausgehend von der Lufteintrittsöffnung 3 zunächst parallel zueinander und biegen dann in dem sich verjüngenden Abschnitt des Gehäuses 2 zu der Luftaustrittsöffnung 4 hin jeweils schräg in Richtung von Längsmittelebenen des Gehäuses 2 um. Dadurch verlaufen die Luftkanäle 8 zur Luftaustrittsöffnung 4 des Luftausströmers 1 hin schräg aufeinander zu, und zwar in zwei zur Strömungsrichtung senkrechten Dimensionen.

Auch hier lässt sich eine Richtung eines Luftstroms aus der Luftaustrittsöffnung in zwei Dimensionen senkrecht zur Strömungsrichtung lenken durch Steuerung von Verhältnissen von Luftmengen, die durch die Luftkanäle 8 strömen. Die Luftmengen durch die Luftkanäle 8 lassen sich beispielsweise mit nicht dargestellten, schwenkbaren Luftleitelementen steuern, die auf der Seite der Lufteintrittsöffnung 3 vor den Trennwänden 11 angeordnet sind. Solche schwenkbaren Luftleitelemente können an jeder Trennwand 11 oder beispielsweise nur an einer mittleren horizontalen und einer mittleren vertikalen Trennwand 11 vorgesehen werden. Eine andere Möglichkeit zur Steuerung der Verhältnisse der Luftmengen durch die Luftkanäle 8 sind vier Gebläse (nicht dargestellt), die Luftströme für jeweils einen Quadranten der Luftkanäle 8 erzeugen. Mit "Quadrant" sind die Luftkanäle 8 auf einer Seite der mittleren horizontalen und der mittleren vertikalen Trennwand 11 gemeint. Selbstverständlich können auch mehr als vier Gebläse vorgesehen werden.

### Bezugszeichenliste

### Luftausströmer

- 1: Luftausströmer
- 2: Gehäuse
- 3: Lufteintrittsöffnung
- 4: Luftaustrittsöffnung
- 5: Luftzuführkanal
- 6: Gehäuseteil
- 7: Luftteiler
- 8: Luftkanal
- 9: schwenkbares Luftleitelement
- 10: feststehendes Luftleitelement
- 11: Trennwand

## Patentansprüche

1. Luftausströmer, mit mindestens einer Luftaustrittsöffnung (4) und mindestens drei Luftkanälen (5, 8), die mindestens drei Luftströme zumindest abschnittsweise getrennt voneinander der mindestens einen Luftaustrittsöffnung (4) des Luftausströmers (1) in zwei Dimensionen quer zu einer Strömungsrichtung schräg aufeinander zu führen und dadurch eine Luftaustrittsrichtung des Luftausströmers (1) bestimmen.

2. Luftausströmer nach Anspruch 1, **dadurch gekennzeichnet, dass** der Luftausströmer (1) vier Luftkanäle (5, 8) aufweist.

3. Luftausströmer nach Anspruch 1 oder 2, **dadurch gekennzeichnet, dass** Luftmengen der Luftströme durch die Luftkanäle (5, 8) steuerbar sind.

4. Luftausströmer nach einem der Ansprüche 1 bis 3, **dadurch gekennzeichnet, dass** der Luftausströmer (1) ein Gehäuse (2) mit einem Luftteiler (7) aufweist, der das Gehäuse (2) in zwei der mindestens drei Luftkanäle (5, 8) teilt, die in zwei Dimensionen quer zu einer Strömungsrichtung schräg aufeinander zu führen und dadurch eine Luftaustrittsrichtung des Luftausströmers (1) bestimmen.

5. Luftausströmer nach Anspruch 4, **dadurch gekennzeichnet, dass** sich das Gehäuse (2) innen und/oder der Luftteiler (7) in Richtung der mindestens einen Luftaustrittsöffnung (4) verjüngen, so dass die beiden vom Luftteiler (7) gebildeten Luftkanäle (8) nahe der mindestens einen Luftaustrittsöffnung (4) schräg in zwei Dimensionen quer zu einer Strömungsrichtung aufeinander zu verlaufen.

6. Luftausströmer nach einem der vorhergehenden Ansprüche, **dadurch gekennzeichnet, dass** der Luftausströmer (1) ein rohrförmiges Gehäuse (2) mit Trennwänden (11) aufweist, die das Gehäuse (2) in Luftkanäle (8) teilen.

7. Luftausströmer nach einem der vorhergehenden Ansprüche, **dadurch gekennzeichnet, dass** die Luftkanäle (8) nahe der Luftaustrittsöffnung (4) des Luftausströmers (1) schräg aufeinander zu verlaufen.

8. Luftausströmer nach einem der vorhergehenden Ansprüche, **dadurch gekennzeichnet, dass** mindestens eine Luftaustrittsöffnung (4) schlitzförmig ist.
